Europäisches Patentamt

European Patent Office

Office européen des brevets

(19)

(11) Publication number: **0 007 228**
**B1**

# (12) EUROPEAN PATENT SPECIFICATION

(45) Date of publication of patent specification: **22.06.83**

(51) Int. Cl.³: **H 01 B 13/00**

(21) Application number: **79301366.5**

(22) Date of filing: **11.07.79**

(54) Apparatus for use in the production of wiring looms.

(30) Priority: **17.07.78 GB 3013478**

(43) Date of publication of application:
**23.01.80 Bulletin 80/2**

(45) Publication of the grant of the patent:
**22.06.83 Bulletin 83/25**

(84) Designated Contracting States:
**AT BE CH DE FR IT LU NL SE**

(56) References cited:
**FR - A - 2 057 427**
**GB - A - 1 191 338**
**US - A - 4 090 537**

(73) Proprietor: **LANSING BAGNALL LIMITED**
**Kingsclere Road**
**Basingstoke, Hampshire (GB)**

(72) Inventor: **Gibbons, Ralph David**
**23 Edgehill Close**
**Basingstoke, Hampshire, RG22 5AD (GB)**

(74) Representative: **Horton, Andrew Robert Grant et al,**
**BOULT, WADE & TENNANT 27 Furnival Street**
**London, EC4A 1PQ (GB)**

## Apparatus for use in the production of wiring looms

This invention relates to apparatus for use in the production of wiring looms, and more particularly to a loom board base having a construction to facilitate the releasable attachment of guide pins.

A wiring loom is an assembly of wires bound or otherwise held together as a bundle, for providing the required electrical connection between various electrical components in a piece of equipment. One particular field in which they are extensively used is in the manufacture of domestic and industrial powered vehicles, such as automobiles, lorries, industrial trucks, which include a large number of such electrical components. The loom or looms are commonly disposed in channels, or are otherwise fixed to the frame of the vehicle, the wires, individually identified by means of colour coding extending between switches, power source, lighting equipment, engine or motor components, fuses, steering gear, etc.

It will be appreciated that the different components and relative disposition thereof in different vehicles requires that such looms be specially designed for the particular vehicle concerned.

The construction of the looms involves the laying of wire lengths along predetermined paths marked on a board, and defined by a multiplicity of pins held in and projecting from the board and serving to hold the wires in place until all of the wires are laid. The wires, of which the ends are, or at some stage in the process have been appropriately terminated, are then taped, clipped or otherwise temporarily held together, and the loom removed from the board and subsequently braided to provide a more permanent binding.

Hitherto, where the loom board has been of a somewhat permanent construction including a plywood base with hammered-in pins, it has been necessary to retain a stock of boards, one for each type of loom to be produced.

It has been proposed, in British Patent Specification No. 1191338 to provide a rigid base board, into which pins are hammered or screwed to define the outline of a harness, and from which board the pins can be released to define the outline of a new harness. That specification also discloses the use above the base board of perforated boards which permit the passage of the pins and can be moved relative to the base board such that the pins project only to a slight extent above the topmost board; this action is for the purpose of facilitating the tying of straps or devices around the bundle of wires which constitute the harness.

It is now envisaged that the manual operation of wire cutting, terminating, laying and binding be performed automatically by a pre-programmed manipulator, and in order to avoid the necessity to provide storage space for a stock of boards, and to maximise the advantages afforded by the use of such a manipulator, it is proposed that the production of a batch of wiring looms shall include the initial step of setting out of pins for any required loom on a universal loom board by the manipulator, rather than the selection of the board from the aforesaid stock.

It is the object of this invention to provide a base constructed so as to facilitate such setting out of the loom board by the manipulator.

According to the present invention there is provided apparatus for use in the production of wiring looms, the apparatus comprising a plurality of guide pins and a loom board base for receiving and releasably holding a plurality of the guide pins in position to project on one side of the board at predetermined points thereon, said base comprising first and second superposed parallel sheets of which the first is apertured and of which the second is adapted to be penetrated by the end portions of the pins so as to inhibit lateral movement of the pins and to releasably hold the pins in place and means for effecting relative separation of the sheets in a direction normal to the sheets characterised in that each pin has a portion which cannot pass through said apertures, whereby the first sheet permits only partial passage of the pins through its apertures and prevents total passage of the pins therethrough, the second sheet includes at least one layer of resilient material and a rigid backing board disposed on the opposite side of the resilient layer from the pins and separation of the sheets releases the pins from the second sheet.

Means may be provided for inverting the table from a working position in which the said one sheet is uppermost to an inverted position in which said other sheet is uppermost, to allow the pins, in use of the board, to fall under gravity from the table upon separation, in said inverted position of the sheets.

The said first sheet preferably comprises a meshwork screen, the second sheet including a meshwork layer facing the said screen, each sheet being carried by one of a pair of superimposed frameworks, arranged for relative displacement by the actuator means.

The said second sheet preferably comprises a first layer of polyurethane rubber, adjacent the meshwork layer, and a layer of foamed material, preferably a relatively dense synthetic foam, between the backing board and the first layer. The two frameworks may be enclosed in a peripheral support frame, the framework of the one sheet being fixed relative to the support frame and that of the other sheet being coupled to be displaced by at least one linear actuator constituting the actuator means and mounted on the support frame.

The invention also embraces apparatus for use in the production of wiring looms, comprising a loom board base for receiving and releasably holding a plurality of guide pins in position to project on one side of the board at predetermined points thereon, the base including a table comprising a pair of superposed parallel sheets of which at least a first is provided with an array of apertures through which end portions of said pins can pass, and of which the second is adapted to receive and inhibit lateral movement of the ends of the pins, thereby to hold each said pin in position as aforesaid, actuator means being provided to effect relative separation of said sheets in a direction normal to the sheets and a plurality of guide pins as aforesaid, characterised in that each pin has a first portion which can pass through any of said apertures of said one sheet, and which terminates at an end of the pin tapered to form a point to facilitate penetration of the sheets, and further has a second portion which cannot pass through the said apertures thereby to limit the extent to which the pin can penetrate the table, and also characterised in that the said relative separation of the sheets releases the ends of the pins from the said other sheet to permit removal of the pins from the table.

Further, the invention embraces apparatus for use in the production of wire looms, including apparatus as hereinbefore defined according to the invention and means, including an automatic manipulator, for assembling wiring looms on the board by laying lengths of wire on said table along predetermined paths to be defined by said guide pins after application of appropriate terminals to the ends of the wires, and by applying to said wires means to hold said wires together to constitute the assembled wiring loom.

An embodiment of the invention will now be described by way of example with reference to the accompanying drawings, in which:—

Figure 1 is a plan view of a loom board base according to the invention;

Figure 2 is a side elevational view of the loom board base of Figure 1;

Figure 3 is an end elevational view of the loom board base of Figure 1; and

Figure 4 is a vertical section through a part of the loom board base of Figure 1.

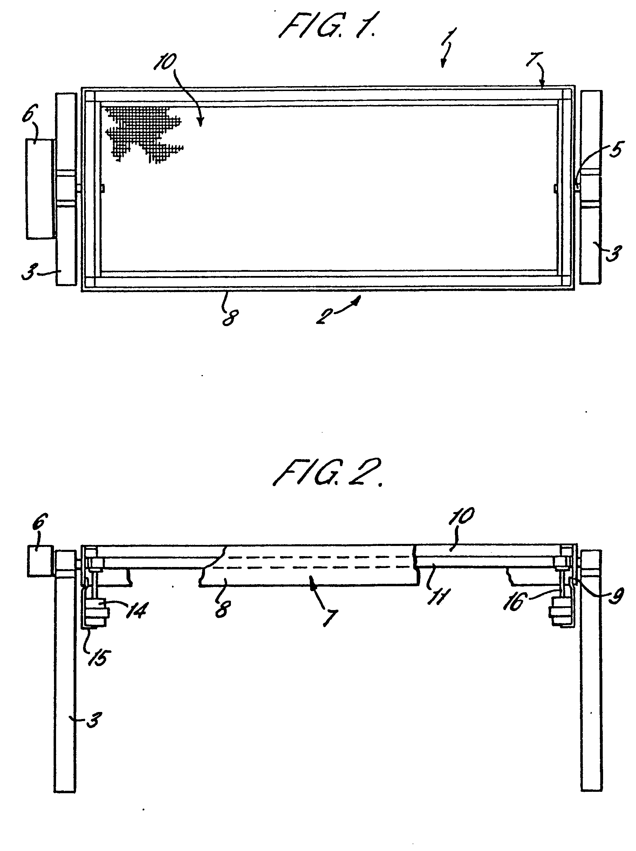

The loom board base 1 depicted in the drawings comprises a rectangular table 2 mounted on a pair of A-shaped stands 3 for rotation about a horizontal axis. Other forms of stand, can be used, e.g. H-shaped to provide for the mounting of equipment above the board.

A pair of trunnion bearings 4 support the table by means of axially aligned stub shafts 5 projecting from opposite ends of the table. Mounted on one of the stands 3 is a rotary rack and pinion operated actuator 6, coupled to the respective shaft 5 to rotate the table 2 about the common axis of the two shafts between a working position, as shown in the drawings, and an inverted position rotationally displaced 180° from the working position; the purpose of such table inversion will be explained later herein.

The table 2 comprises a rectangular skirt support frame 7 comprising two side and two end members 8 and 9 respectively. Disposed within the support frame 7 are two mesh frames 10 and 11, one superposed upon the other. The upper mesh frame 10 is fixed with respect to the support frame 7 at a position adjacent the upper rim of such frame 7. The lower frame 11, which is of slightly smaller dimensions than the upper frame 10, is, in the working position depicted, positioned beneath and immediately adjacent the upper frame 10.

Pairs of linear actuators 14 carried by respective brackets 15 fixed to and depending from the opposite end members 9 of the support frame are arranged to maintain the lower mesh frame in this disposition in the working position of the table, but are actuable in the inverted position of the table to cause retraction of their respective piston rods 16 and consequently to affect a linear relative separation of the mesh frames, of which the lower one is connected to the said piston rods. The purpose of this separation will become apparent as this description proceeds.

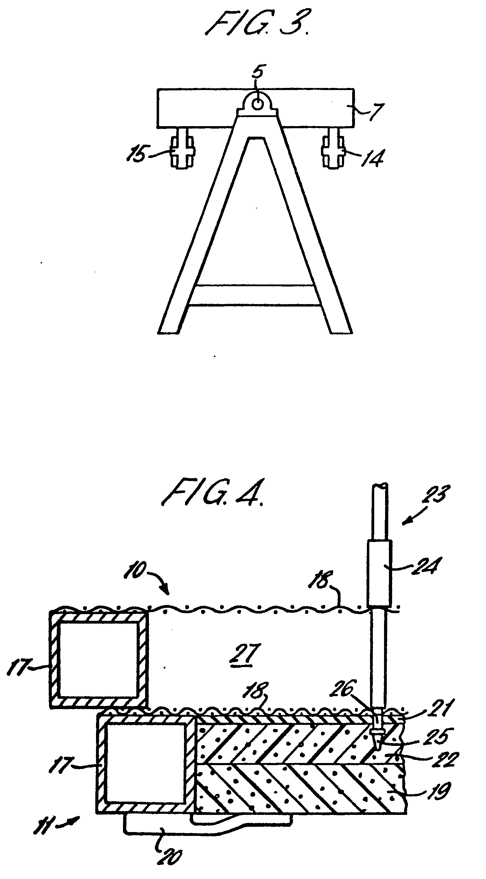

With reference to Figure 4 of the drawings, each mesh frame comprises a rectangular framework 17 made, in this embodiment from square section tube. Other sections, such as a channel section may alternatively be used. Across the top face of each framework is a rectangular perforated sheet 18 of wire mesh. Such framework and mesh sheet constitute the upper mesh frame, whilst the lower mesh frame includes further elements disposed beneath the mesh sheet 18. Such elements comprise a rigid backing board 19 held in place by a number of retainer projections 20 projecting inwardly from the underside of the framework. Sandwiched between the backing board 19 and the mesh sheet 18 are two superposed contiguous sheets 21, 22, the upper sheet 21 being made of polyurethane rubber, or appropriate substitute, and disposed immediately beneath the mesh sheet 18, and a sheet 22 being made of dense natural or synthetic foam such as polystyrene. The total thickness of the sheets 21 and 22 and the backing board 19 is conveniently approximately equal to the dimension of the framework as measured through the mesh frame.

The above described loom board base 1 is intended to be used in conjunction with guide pins 23 having a shape and configuration as illustrated in Figure 4. The pins are double-ended, that is to say symmetrical about a point midway along their length such that a feeder which supplies the pins for handling by the automatic manipulator mentioned earlier need not distinguish one end of a pin from the other.

It will be appreciated, however, that asymmetric pins may alternatively be employed, a suitable bowl feeder being used to present the pins with correct orientation for the manipulator.

The pin is of circular cross section and comprises a central portion 24 of diameter greater than the aperture size of the mesh, to prevent such central portion passing through the mesh. The remainder of the pin, projecting on opposite sides of the central portion, is of diameter smaller than the aperture size, and each end of the pin is formed with a conical head 25 and an adjacent annular groove 26. The length of each part of the pin between the central portion 24 and the respective groove 26 is approximately equal to the distance between the two mesh sheets in the working position of the table.

There follows a description of the manner in which the described loom board base and guide pins may be used to form a loom board for use in the production of wiring looms.

With the table 2 maintained in its working position, the automatic manipulator takes hold of guide pins supplied by the feeder, one at a time, and places them at predetermined positions on the table. This it achieves by pushing the pin, which it holds in an orientation in which its axis extends normal to the plane of the mesh sheet 18, downward so that the lower end of the pin passes through an aperture in the upper mesh sheet 18, through the space 27 between the two mesh sheets and, through an aperture in the lower mesh sheet. It then pierces the polyurethane layer 21 and enters the foam layer 22.

The annular shoulder at the lower end of the central portion of the pin then abuts the wire elements defining the aperture in the upper mesh sheet through which the pin extends, and the manipulator releases its grip upon the pin.

The width groove 26, that is to say its dimension measured along the pin, is greater than the thickness of the layer 21, and the edge of the aperture produced as the pin pierces this layer can reflex into this groove to provide positive retention of the pin. This retention is enhanced by a gripping effect of the foam surrounding the pin head, this foam having been locally compressed upon entry of the pin head into the layer 22. The pin is accordingly held relatively firmly in an upright position.

The manipulator proceeds to position a multiplicity of pins on the table to define the paths for the individual wires of the looms to be produced. It then proceeds with the production of the looms. Wires are cut, appropriately terminated, laid along the correct paths between the guide pins, and temporarily taped together. To remove the loom from the loom board, the rotary actuator 6 is operated to invert the table 2, whereupon the loom falls from the table onto a moving conveyor or other appropriate receiving member. The table is then re-inverted to the working position, and another loom is assembled.

After assembly and ejection of the last wiring loom of a production batch, the pins are removed from the table to prepare for the setting up of another loom board for a subsequent batch. The pins are removed by actuation of the linear actuators 14 in the inverted position of the table to cause a relative separation of the mesh frames as aforesaid. This separation causes withdrawal of the pin heads from the lower mesh frame 12, to cause the pins to fall under gravity onto the conveyor.

The resilience of the rubber layer 21 and foam layer 22 is such that after withdrawal of the pin heads the apertures produced as the pins were placed on the table tend to close, and the gripping action upon pins subsequently placed at precisely the same locations as before will be substantially unaffected.

## Claims

1. Apparatus for use in the production of wiring looms, the apparatus comprising a plurality of guide pins (23) and a loom board base (1) for receiving and releasably holding a plurality of the guide pins in position to project on one side of the board at predetermined points thereon, said base comprising first and second superposed parallel sheets, of which the first is apertured and of which the second is adapted to be penetrated by the end portions of the pins so as to inhibit lateral movement of the pins and to releasably hold the pins in place, and means (14) for effecting relative separation of the sheets in a direction normal to the sheets characterised in that each pin has a portion which cannot pass through said apertures, whereby the first sheet (10) permits only partial passage of the pins through its apertures and prevents total passage of the pins therethrough, the second sheet includes at least one layer (21) of resilient material and a rigid backing board (19) disposed on the opposite side of the resilient layer from the pins, and separation of the sheets releases the pins (23) from the second sheet.

2. Apparatus according to claim 1 wherein each of said pins has a portion (24) defining a shoulder, intermediate the ends of the pin, for engaging said first sheet to prevent further passage of the pin through the respective aperture.

3. Apparatus for use in the production of wiring looms, comprising a loom board base (1) for receiving and releasably holding a plurality of guide pins in position to project on one side of the board at predetermined points thereon, the base including a table (2) comprising a pair of superposed parallel sheets of which at least a first (10) is provided with an array of apertures through which end portions of said pins can pass, and of which the second (21, 22) is adapted to receive and inhibit lateral movement of the ends of the pins, thereby to hold each said pin in position as aforesaid, actuator means (14) being provided to effect relative separation of said sheets in a direction normal to the sheets and a plurality of guide pins (23) as aforesaid, characterised in that each pin has a first portion which can pass through any of said apertures of said one sheet, and which terminates at an end of the pin tapered to form a point to facilitate penetration of the sheets, and further has a second portion (24) which cannot pass through the said apertures thereby to limit the extent to which the pin can penetrate the table and also characterised in that the said relative separation of the sheets releases the ends of the pins from the said other sheet to permit removal of the pins from the table.

4. Apparatus according to claim 1 or claim 3 including means for inverting the table from a working position in which the said one sheet is uppermost to an inverted position in which said other sheet is uppermost, to allow the pins, when in use, to fall under gravity from the table upon separation, in said inverted position of the sheets.

5. Apparatus according to claim 3 or claim 4 wherein said first sheet (10) is a meshwork screen (18) and is carried on a peripheral framework.

6. Apparatus according to claim 5 wherein said second sheet includes a meshwork layer (18) facing said first sheet and is also carried on a peripheral framework, said actuator means (14) being connected to said frameworks to effect relative displacement thereof.

7. Apparatus according to claim 6 wherein said second sheet further includes a first layer (21) of resilient material adjacent said meshwork layer (18), a relatively rigid board (19) and a second layer (22) of foamed material between said rigid board and said first layer.

8. Apparatus according to claim 7 wherein said first layer (21) is made of polyurethane rubber, and said second layer (22) is made of a synthetic foam.

9. Apparatus according to any of claims 6 to 8 wherein the table (2) includes a peripheral support frame (7) enclosing the same frameworks of which one (10) is fixed relative to the support frame, and of which the other (11) is coupled to be displaced by one or more linear actuators constituting said actuator means and mounted on said support frame.

10. Apparatus according to any of claims 3 to 9 wherein each pin is double-ended, the said second portion (24) comprising a length extending symmetrically from the centre of the pin toward both ends.

11. Apparatus for use in the production of wiring looms including apparatus according to any of claims 1 to 10 and means, including an automatic manipulator, for assembling wiring looms on the board by laying lengths of wire on said table along predetermined paths to be defined by said guide pins after application of appropriate terminals to the ends of the wires, and by applying to said wires means to hold said wires together to constitute the assembled wiring loom.

**Patentansprüche**

1. Vorrichtung für die Herstellung von Kabelbäumen bestehend aus mehreren Führungsstiften (23) und einer Kabelbaum-Grundplatte (1) zur Aufnahme und lösbaren Halterung von mehreren Führungsstiften an solcher Position, daß diese an einer Seite an vorbestimmten Stellen des Brettes vorstehen, wobei die Platte eine erste und eine zweite Tafel parallel übereinanderliegend aufweist, wobei die erste Tafel mit Öffnungen versehen und die zweite Tafel so ausgebildet ist, daß die Endabschnitte der Stifte derart in sie eindringen können, daß einer seitlichen Bewegung der Stitfe entgegengewirkt und diese lösbar an ihrer Stelle gehalten werden, und eine Einrichtung (14) zum Auseinanderbewegen der Tafeln in senkrechter Richtung zu den Tafeln, dadurch gekennzeichnet, daß jeder Stift einen Teil aufweist, der nicht durch die Löcher hindurchtreten kann, wodurch die erste Tafel (10) nur ein teilweises Durchtreten der Stifte durch ihre Löcher gestattet und ein völliges Durchgehen der Stifte durch diese verhindert, daß die zweite Tafel wenigstens eine Schicht (21) aus federnd nachgiebigem Material und eine starre Rückwand (19) auf der den Stiften gegenüberliegenden Seite der federnden Schicht aufweist, und das Auseinanderbewegen der Tafeln die Stifte (23) aus der zweiten Tafel löst.

2. Vorrichtung nach Anspruch 1, dadurch gekennzeichnet, daß jeder der Stifte zwischen den Enden einen eine Schulter bildenden Teil (24) aufweist, der mit der ersten Tafel zusammenwirkt, um das weitere Passieren des Stiftes durch das jeweilige Loch zu verhindern.

3. Vorrichtung für die Herstellung von Kabelbäumen, bestehend aus einer Kabelbaum-Grundplatte (1) zur Aufnahme und lösbaren Halterung von mehreren Führungsstiften an solcher Position, daß sie an vorbestimmten Punkten der Platte an einer Seite vorstehen, wobei die Halterung einen Tisch (2) mit zwei übereinanderliegenden, parallelen Tafeln aufweist, von denen wenigstens eine erste Tafel (10) mit einer Reihe von Löchern versehen ist, durch die die Enden der Stifte durchtreten können, und wenigstens die zweite Tafel (21, 22) die Enden der Stifte aufnehmen und ihre seitliche Bewegung verhindern kann, wodurch jeder Stift in seiner vorstehend genannten Position gehalten wird, und wobei eine Betätigungseinrichtung (14) vorgesehen ist, um die Tafeln und mehrere der Führungsstifte (23) wie vorstehend beschrieben in senkrechter Richtung au den Tafeln voneinander zu trennen, dadurch gekennzeichnet, daß jeder Stift einen ersten Teil, der durch jedes der Löcher der einen Tafel paßt und der in einem Ende des Stiftes endet, welches in Form einer Spitze zugespitzt ist, um das Eindringen in die Tafeln zu erleichtern, und einen zweiten Teil (24) aufweist, der nicht durch diese Löcher paßt, um so den Grad des Eindringens in den Tisch zu begrenzen, und daß das relative Trennen der Tafeln die Enden der Stifte aus der anderen Tafel löst, um das Herausnehmen der Stifte aus der Tafel zu ermöglichen.

4. Vorrichtung nach Anspruch 1 oder 3, dadurch gekennzeichnet, daß eine Einrichtung zum Umkehren des Tisches aus einer Arbeitsposition, in der die eine Tafel oben liegt, in eine umgedrehte Position, in der die andere Tafel oben liegt, vorgesehen ist, um ein Herausfallen der Stifte infolge der Gravitation aus dem Tisch beim Trennen in dieser umgekehrten Position der Tafeln zu ermöglichen.

5. Vorrichtung nach Anspruch 3 oder 4, dadurch gekennzeichnet, daß die erste Tafel (10) ein Maschensieb (18) ist, welches durch einen äußeren Rahmen getragen wird.

6. Vorrichtung nach Anspruch 5, dadurch gekennzeichnet, daß die zweite Tafel eine Maschensiebschicht (18) aufweist, die der ersten Tafel zugewandt ist und ebenfalls von einem äußeren Rahmen getragen wird, wobei an den Rahmen eine Betätigungseinrichtung (14) befestigt ist, um deren Relativbewegung zu bewirken.

7. Vorrichtung nach Anspruch 6, dadurch gekennzeichnet, daß die zweite Tafel weiterhin neben der Maschensiebschicht (18) eine erste Schicht (21) aus federndem Material, ein relativ starres Brett (19) und zwischen dem starren Brett und der ersten Schicht eine zweite Schicht (22) aus geschäumten Material aufweist.

8. Vorrichtung nach Anspruch 7, dadurch gekennzeichnet, daß die erste Schicht (21) aus Polyurethangummi und die zweite Schicht (22) aus einem geschäumten Kunststoff besteht.

9. Vorrichtung nach jedem der Ansprüche 6 bis 8, dadurch gekennzeichnet, daß der Tisch (2) einen äußeren Halterahmen (7) aufweist, der die beiden Rahmen umgibt, wobei ein Rahmen (10) relativ zum Halterahmen feststehend und der andere Rahmen (11) so befestigt ist, daß er durch eine oder mehrere lineare Betätigungselemente, die die Betätigungseinrichtung bilden und am Halterahmen befestigt sind, verstellt werden kann.

10. Vorrichtung nach jedem der Ansprüche 3 bis 9, dadurch gekennzeichnet, daß jeder Stift zwei Enden aufweist, wobei der zweite Teil (24) eine Länge aufweist, die symmetrisch von der Mitte des Stiftes aus sich nach beiden Enden hin erstreckt.

11. Vorrichtung für die Herstellung von Kabelbäumen mit einer Vorrichtung nach jedem der Ansprüche 1 bis 10, gekennzeichnet durch eine Einrichtung mit einer automatischen Betätigungseinrichtung zum Montieren von Kabelbäumen auf dem Brett, wobei Kabelstücke entlang vorbestimmten Wegen, die durch die Führungsstifte bestimmt sind, ausgelegt werden, nachdem an die Kabel geeignete Anschlußklemmen angebracht worden sind, und an den Kabeln Glieder zum Zusammenhalten der Kabel angebracht werden, um den montierten Kabelbaum zu bilden.

**Revendications**

1. Appareil destiné à la fabrication de harnais de câblage, l'appareil comprenant plusieurs broches de guidage (23) et une base de panneau de harnais (1) destinée à recevoir et à retenir en position de façon détachable plusieurs des broches de guidage de façon qu'elles dépassent d'un côté du panneau en des points prédéterminés de celui-ci, la base comprenant une première et une deuxième feuilles parallèles superposées (18) dont la première est munie d'ouvertures et dont la deuxième est conçue pour que la partie terminale des broches y pénètre de manière à inhiber le mouvement latéral des broches et à retenir les broches en place de façon détachable, et des moyens (14) servant à effectuer la séparation relative des feuilles dans une direction normale aux feuilles, caractérisé par le fait que chaque broche présente une partie qui ne peut pas passer à travers les ouvertures, de sorte que la première feuille (10) permet seulement un passage partiel des broches à travers ses ouvertures et empêche le passage total des broches au travers, la deuxième feuille comprenant au moins une couche (21) de matière élastique et un panneau de soutien rigide (19) disposé au côté opposé aux broches relativement à la couche élastique, la séparation des feuilles ayant pour effet de séparer les broches (23) de la deuxième feuille.

2. Appareil selon la revendication 1, caractérisé en ce que chacune des broches présente une partie (24) définissant un épaulement entre les extrémités de la broche de manière à s'appliquer à la première feuille (10) pour empêcher la broche de continuer à passer à travers l'ouverture respective.

3. Appareil destiné à la fabrication de harnais de câblage, comprenant une base de panneau de harnais (1) destinée à recevoir et à retenir en position de façon détachable plusieurs broches de guidage (23) de façon qu'elles dépassent d'un côté du panneau en des points prédéterminés de celui-ci, la base comportant une table (2) qui comprend une paire de feuilles parallèles superposées, dont au moins une première (10) est munie d'une série d'ouvertures à travers lesquelles peuvent passer des parties terminales des broches, et dont la deuxième (21, 22) est conçue pour recevoir les extrémités des broches et inhiber leur mouvement latéral, de manière à retenir chacune des broches en position de façon détachable, des moyens d'actionnement (14) étant prévus pour effectuer la séparation relative des feuilles dans une direction normale aux feuilles et pour provoquer ainsi le détachement des broches de guidage (23), caractérisé par le fait que chaque broche présente une première partie qui peut passer à travers l'une quelconque des ouvertures de la première feuille mentionnée (10) et qui se termine à une extrémité de la broche qui est amincie pour former une pointe (25) afin de faciliter la pénétration des feuilles, et présente en outre une deuxième partie (24) qui ne peut pas passer à travers les ouvertures, de manière à limiter la mesure dans laquelle la broche peut pénétrer la table, et par le fait que la séparation relative des feuilles a pour effet de dégager de l'autre feuille mentionnée les extrémités des broches pour permettre de retirer les broches de la table.

4. Appareil selon l'une des revendications 1 et 3, caractérisé en ce qu'il comprend des moyens (16) pour renverser la table d'une position de travail dans laquelle la première feuille mentionnée (10) se trouve tout en haut à une position renversée dans laquelle l'autre feuille mentionnée (21, 22) se trouve tout en haut, pour permettre aux broches, lorsqu'elles sont utilisées, de tomber de la table par gravité lors de la séparation, dans la position renversée des feuilles.

5. Appareil selon l'une des revendications 3 et 4, caractérisé en ce que la première feuille (10) est un tamis à mailles (18) et est portée par un châssis périphérique (17).

6. Appareil selon la revendication 5, caractérisé en ce que la deuxième feuille comprend une couche à mailles (18) tournée vers la première feuille et est aussi portée par un châssis périphérique (17), les moyens d'actionnement (14) étant reliés aux châssis pour effectuer le déplacement relatif de ceux-ci.

7. Appareil selon la revendication 6, caractérisé en ce que la deuxième feuille comprend en outre une première couche (21) de matière élastique adjacente à la couche à mailles (18), un panneau relativement rigide (19) et une deuxième couche (22) de matière alvéolaire entre le panneau rigide et la première couche.

8. Appareil selon la revendication 7, caractérisé en ce que la première couche (21) est formée de caoutchouc de polyuréthane et la deuxième couche (22) est formée d'une matière alvéolaire synthétique.

9. Appareil selon l'une des revendications 6 à 8, caractérisé en ce que la table (2) comprend un bâti support périphérique (7) enfermant les châssis (17), dont l'un (10) est fixe relativement au bâti support et dont l'autre (11) est accouplé de manière à être déplacé par un ou plusieurs organes d'actionnement linéaires constituant les moyens mentionnés et montés sur le bâti support.

10. Appareil selon l'une des revendications 3 à 9, caractérisé en ce que chaque broche est à deux extrémités, la deuxième partie (24) comprenant un tronçon qui part symétriquement du centre de la broche vers les deux extrémités.

11. Appareil destiné à la fabrication de harnais de câblage selon l'une des revendications précédentes, caractérisé en ce qu'il comprend des moyens comprenant un manipulateur automatique, servant à assembler des harnais de câblage sur le panneau en posant sur la table des longueurs de fil le long de parcours prédéterminés à définir par les broches de guidage après application de cosses appropriées aux extrémités des fils et par application aux fils de moyens servant à retenir ces fils ensemble pour constituer le harnais de câblage assemblé.

FIG. 1.

FIG. 2.

1

## FIG. 3.

## FIG. 4.